(19) **Europäisches Patentamt**

**European Patent Office**

**Office européen des brevets**

(11) Veröffentlichungsnummer: **0 516 074 B1**

(12) **EUROPÄISCHE PATENTSCHRIFT**

(45) Veröffentlichungstag der Patentschrift: **27.09.95**

(51) Int. Cl.⁶: **C08F 8/30**, C08L 57/10, C08J 3/24

(21) Anmeldenummer: **92108931.4**

(22) Anmeldetag: **27.05.92**

(54) **Aminooxy-Vernetzer enthaltende wässrige Dispersionen von Carbonylgruppen enthaltenden Copolymerisaten.**

(30) Priorität: **28.05.91 DE 4117487**

(43) Veröffentlichungstag der Anmeldung:
**02.12.92 Patentblatt 92/49**

(45) Bekanntmachung des Hinweises auf die Patenterteilung:
**27.09.95 Patentblatt 95/39**

(84) Benannte Vertragsstaaten:
**DE ES FR GB IT NL SE**

(56) Entgegenhaltungen:
**DE-A- 3 537 099**
**US-A- 4 666 962**

(73) Patentinhaber: **WACKER-CHEMIE GMBH**
**Hanns-Seidel-Platz 4**
**D-81737 München (DE)**

(72) Erfinder: **Kohlhammer, Klaus, Dr.**
**Tannenweg 6**
**W-8261 Marktl (DE)**
Erfinder: **Huster, Wilfried, Dr.**
**Mühlbachstrasse 77**
**W-8261 Emmerting (DE)**
Erfinder: **Deinhammer, Wolfgang**
**Röntgenstrasse 32**
**W-8263 Burghausen (DE)**

**Beschreibung**

Die Erfindung betrifft Aminooxy-Vernetzer enthaltende wäßrige Dispersionen von Carbonylgruppen enthaltenden Copolymerisaten, Verfahren zu deren Herstellung und deren Verwendung als Vernetzungssystem in Bindemitteln, Klebemitteln und Überzugsmitteln.

Wäßrige Dispersionen auf der Basis von carbonylgruppenhaltigen Copolymerisaten, welche Polyhydrazide oder Polyhydrazone enthalten, führen während der Filmbildung durch die chemische Reaktion zwischen den Carbonylgruppen der Copolymerteilchen und den funktionellen Gruppen der Polyhydrazide bzw. Polyhydrazone zur Ausbildung von stark vernetzten Filmen. Derartige Vernetzungssysteme sind beispielsweise aus der DE-A 1495706 (US-A 3345336) oder der EP-A 15644 (US-A 4256809) bekannt.

Aufgrund der guten Haftungseigenschaften werden solche bei der Filmbildung vernetzende Copolymerdispersionen als Bindemittel (DE-A 3319239 = EP-A 130336), Klebemittel (EP-B 148386 = US-A 4609420, DE-A 3319240 = US-A 4529772), Dichtungsmassen (DE-A 3537099) und Überzugsmittel (DE-A 3724369 = US-A 4894261) eingesetzt. Nachteilig ist allerdings die ungenügende Festigkeit der verklebten Verbunde bei Wasserlagerung.

Ein weiterer Nachteil bei diesen Vernetzungssystemen ist die Freisetzung von hochgiftigem und cancerogenem Hydrazin bei der Lagerung und Anwendung derartiger Systeme. In der EP-B 3516 (US-A 4250070), der DE-A 2819092 (US-A 4267091) und der DE-A 3216967 wird daher vorgeschlagen, zur Verminderung des Gehalts an freiem Hydrazin, den Polyhydrazin enthaltenden Copolymerdispersionen wasserlösliche Übergangsmetallsalze zuzusetzen.

Aus der DE-A 3241829 (US-A 4546078) ist ein Verfahren zur Immobilisierung von Mikroorganismen bekannt, wobei die Mikroorganismen in einer wäßrigen Lösung eines Acrolein-Vinylpyrrolidon-Copolymerisats suspendiert werden. Nach Zugabe einer wäßrigen Lösung einer Alkylendioxydiamin-Verbindung werden die Mikroorganismen in der sich sofort bildenden gelartigen Polymerisatmasse eingeschlossen.

Der Erfindung lag die Aufgabe zugrunde, wäßrige Dispersionen auf der Basis von Carbonylgruppen enthaltenden Dispersionen mit Vernetzungsmitteln zur Verfügung zu stellen, welche bei der Filmbildung vernetzen, wobei jedoch keine Hydrazinfreisetzung oder zumindest eine geringere Hydrazinfreisetzung als bei den im Stand der Technik genannten Polyhydrazin-Vernetzern erfolgen sollte. Weiter sollte die Vernetzung erst bei Temperaturen $\geq 10\,^\circ C$, vorzugsweise $\geq$ Raumtemperatur ablaufen. Die Systeme sollten zusätzlich noch eine hohe Lagerstabilität bei einem hohen Vernetzungsgrad während der Filmbildung aufweisen. Die mit den Dispersionen hergestellten Verklebungen sollten beständig sein gegenüber Wasser oder organischen Lösungsmitteln.

Gegenstand der Erfindung sind Aminooxy-Vernetzer enthaltende wäßrige Dispersionen von Carbonylgruppen enthaltenden Copolymerisaten enthaltend

A) 30 bis 70 Gew%, bezogen auf das Gesamtgewicht der Dispersion, eines Copolymerisats zusammengesetzt aus
70 bis 99.9 Gew% eines oder mehrerer Comonomere aus der Gruppe der (Meth)acrylsäureester von Alkoholen mit 1 bis 10 C-Atomen, Vinylester von gesättigten aliphatischen Carbonsäuren mit 2 bis 10 C-Atomen, Olefine, Vinylaromaten, Vinylhalogenide und/oder Vinylether und
0.1 bis 30 Gew% eines oder mehrerer carbonylgruppenhaltiger ethylenisch ungesättigter Comonomere aus der Gruppe der $\alpha,\beta$-ethylenisch-ungesättigten Aldehyde, Alkylvinylketone, Ketocarbonsäurevinylester, N-Keto-acrylamide, Diketen, Kohlenmonoxid und Acetoacetoxyethyl(meth)acrylat, und
B) 0.1 bis 10 Mol, pro Mol Carbonylgruppen im Copolymerisat A, eines Aminooxy-Vernetzers der allgemeinen Formel

$$(H_2NO)_mR(CONHNH_2)_n$$

wobei R für einen substituierten oder unsubstituierten aliphatischen oder aromatischen Kohlenwasserstoffrest oder einen Organosiloxanrest steht,
$m \geq 1$, $n = 0$ oder $1$, und $m + n \leq 3$ ist oder
dessen Salz mit einem Anion einer organischen oder anorganischen Säure.

Die erfindungsgemäßen carbonylgruppenhaltigen Copolymerisate, bei denen es sich auch um Pfropfcopolymerisate handeln kann, werden in bekannter Weise durch radikalische Polymerisation in Masse, in Lösung, in Suspension oder in Emulsion hergestellt. Von den genannten Verfahren ist die Emulsionspolymerisation die bevorzugte Variante. Bevorzugte Basismonomere sind aus der Gruppe der Methacrylsäureester oder Acrylsäureester von Alkoholen mit 1 bis 10 C-Atomen Methylmethacrylat, Methylacrylat, Ethylmethacrylat, Ethylacrylat, Isopropylmethacrylat, Isopropylacrylat, tert.-Butylacrylat, n-Butylacrylat und Ethylhexylacrylat; aus der Gruppe der Vinylester von gesättigten aliphatischen Carbonsäuren mit 2 bis 10 C-Atomen Vinylacetat, Isopropenylacetat, Vinylpropionat, Vinyllaurat und Versaticsäure[R]-Vinylester mit 9 bis 10 C-Atomen (Vinylester von gesättigten $\alpha$-verzweigten Monocarbonsäuren, Handelsprodukt der Fa. Shell); aus der Gruppe der Olefine Ethylen, Propylen und 1,3-Butadien; aus der Gruppe der Vinylhalogenide Vinylchlorid und Styrol als bevorzugter Vinylaromat.

Gegebenenfalls können die erfindungsgemäßen Copolymerisate als Basismonomere noch bis zu 10 Gew%, bezogen auf das Copolymerisat, ethylenisch ungesättigte, funktionelle Comonomere enthalten. Beispiele hierfür sind Mono- oder Dicarbonsäuren wie Methacrylsäure, Acrylsäure oder Fumarsäure und deren Amide, hydroxyfunktionelle Monomere wie Hydroxyethylacrylat, 2-Hydroxypropylacrylat oder N-Methylolacrylamid, sowie sulfonatfunktionelle Monomere wie Vinylsulfonat oder Methacrylamidopropansulfonsäure.

Der Gehalt an carbonylgruppenhaltigen ethylenisch ungesättigten Comonomeren beträgt vorzugsweise 0.1 bis 20 Gew%, insbesonders 0.5 bis 5.0 Gew%, jeweils bezogen auf das Copolymerisat. Bevorzugte Beispiele hierfür sind aus der Gruppe der $\alpha,\beta$-ethylenisch ungesättigten Aldehyde Acrolein, Methacrolein, Crotonaldehyd und Formylstyrol; aus der Gruppe der Alkylvinylketone Vinylmethylketon oder Vinylethylketon; aus der Gruppe der Ketocarbonsäurevinylester Lävulinsäurevinylester; sowie Diacetonacrylamid aus der Gruppe der N-Ketoacrylamide. Besonders bevorzugt sind Diacetonacrylamid, Crotonaldehyd, Methacrolein, Acetoacetoxyethylacrylat und Acetoacetoxyethylmethacrylat.

Besonders bevorzugte Copolymerisate A mit einem Gehalt an den genannten carbonylgruppenhaltigen ethylenisch ungesättigten Comonomeren sind:

Copolymerisate auf der Basis von Ethylen-Vinylchlorid-Copolymeren mit einem Ethylen-Gehalt von vorzugsweise 10 bis 50 Gew% und einem Vinylchlorid-Gehalt von 50 bis 90 Gew%, jeweils bezogen auf das Gesamtgewicht des Copolymerisats A;

Copolymerisate auf der Basis von Ethylen-Vinylester-Copolymeren, insbesonders Ethylen-Vinylacetat-Copolymeren, mit einem Ethylen-Gehalt von vorzugsweise 10 bis 50 Gew% und einem Vinylester-Gehalt von 50 bis 90 Gew%, jeweils bezogen auf das Gesamtgewicht des Copolymerisats A;

Copolymerisate auf der Basis von Ethylen-Vinylester-(Meth)acrylsäureester-Copolymeren mit einem Ethylen-Gehalt von 10 bis 50 Gew%, einem Vinylester-Gehalt von 50 bis 90 Gew% und einem (Meth)-acrylsäureester-Gehalt von 5 bis 20 Gew%, insbesonders Copolymerisate mit Butylacrylat, Methylmethacrylat und/oder Ethylhexylacrylat.

Copolymerisate auf der Basis der genannten Ethylen/Vinylchlorid-, Ethylen/Vinylacetat- und Ethylen/Vinylacetat/(Meth)acrylat-Polymerisate mit einem Gehalt von bis zu 10 Gew% an N-Methylolacrylamid, Acrylsäure, Vinylsulfonat und/oder 2-Hydroxy-propylacrylat.

Copolymerisate auf der Basis von (Meth)acrylsäureester-Copolymeren, insbesonders Copolymerisate mit Methylmethacrylat, Butylacrylat und/oder Ethylhexylacrylat.

Die Angaben in Gew% addieren sich dabei jeweils auf 100 Gew% im Copolymerisat.

Die Herstellung der wäßrigen Copolymerisatdispersionen erfolgt vorzugsweise nach dem Emulsionspolymerisationsverfahren und wird in den üblichen Polymerisationsgefäßen durchgeführt. Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Alle Dosierungen erfolgen vorzugsweise im Maße des Verbrauchs der jeweiligen Komponente.

Die Emulsionspolymerisation wird in einem Temperaturbereich von 0 bis 100°C durchgeführt und mit den für die Emulsionspolymerisation üblicherweise eingesetzten Methoden eingeleitet. Die Initiierung erfolgt mittels der üblichen wasserlöslichen Radikalbildner, die vorzugsweise in Mengen von 0.01 bis 3.0 Gew%, bezogen auf das Gesamtgewicht der Monomeren, eingesetzt werden. Beispiele hierfür sind Ammonium- und Kaliumpersulfat, - peroxodisulfat; Wasserstoffperoxid; Alkylhydroperoxide, wie tert.-Butylhydroperoxid; Kalium-, Natrium- und Ammoniumperoxodiphosphat; Azoverbindungen, wie Azobisisobutyronitril oder Azobiscyanovaleriansäure. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Alkaliformaldehydsulfoxylate. Bei der Redoxinitiierung werden dabei vorzugsweise eine oder beide Redox-Katalysatorkomponenten während der Polymerisation dosiert.

Als Dispergiermittel können alle üblicherweise bei der Emulsionspolymerisation verwendeten Emulgatoren und Schutzkolloide eingesetzt werden. Vorzugsweise werden 1 bis 6 Gew%, bezogen auf das Gesamtgewicht der Monomeren, an Emulgator eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Gegebenenfalls können Schutzkolloide, vorzugsweise in Mengen bis zu 15 Gew%, bezogen auf das Gesamtgewicht der Monomeren, eingesetzt werden. Beispiele hierfür sind Vinylalkohol/Vinylacetat-Copolymere mit einem Gehalt von 80 bis 100 Mol% Vinylalkoholeinheiten, Polyvinylpyrrolidone mit einem Molekulargewicht von 5000 bis 400000, Hydroxyethylcellulosen mit einem Substitutionsgradbereich von 1.5 bis 3.

Der für die Polymerisation gewünschte pH-Bereich, der im allgemeinen zwischen 2.5 und 10, vorzugsweise 3 und 8, liegt, kann in bekannter Weise durch Säuren, Basen oder übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe zugesetzt werden.

Zur Vernetzung der carbonylgruppenhaltigen Copolymeren enthalten die erfindungsgemäßen wäßrigen Dispersionen noch 0.1 bis 10 Mol, vorzugsweise 0.3 bis 4 Mol, pro Mol Carbonylgruppen im Copolymerisat A, eines Aminooxy-Vernetzers der allgemeinen Formel

$(H_2NO)_mR(CONHNH_2)n$

wobei R für einen substituierten oder unsubstituierten aliphatischen oder aromatischen Kohlenwasserstoffrest oder einen Organosiloxanrest steht,
$m \geq 1$, $n = 0$ oder $1$, und $m + n \leq 3$ ist
oder
dessen Salz mit einem Anion einer organischen oder anorganischen Säure.

Bevorzugte Vernetzer sind bifunktionelle Verbindungen der Formel $(H_2NO)R(CONHNH_2)$. Am meisten bevorzugt sind Vernetzer mit zwei Aminooxy-Gruppen der Formel $(H_2NO)_2R$.

Als Spacer R eignen sich beispielsweise gesättigte, verzweigte oder unverzweigte Alkylenreste mit 1 bis 10 C-Atomen, wie etwa Ethylen-, Propylen-, iso-Propylen, Butylen-, Pentylen-, Hexylen-Rest. Weiter eignen sich ungesättigte, acyclische Reste R mit bis zu 4 C-Atomen, beispielsweise der Butenylen-Rest. Beispiele für aromatische Reste R sind meta-Xylol und para-Xylol. Geeignete Organosiloxanreste sind Diorganopolysiloxane, beispielsweise trimethylsiloxy-endblockierte Dimethylpolysiloxane $(CH_3)_3Si(Si(CH_3)_2O)_xSi(CH_3)_3$ mit einem Polymerisationsgrad x von 1 bis 5.

Beispiele für Salze der obengenannten Vernetzer sind für Salze von anorganischen Säuren die entsprechenden Hydrochloride, Hydrobromide, Carbonate, Sulfate oder Perchlorate.

Beispiele für Salze von organischen Säuren sind die entsprechenden Acetate, Propionate oder Benzoate. Bevorzugt sind die Hydrochlorid- oder Hydrobromid-Salze der Vernetzer, besonders bevorzugt die Mono-Hydrochloride oder Mono-Hydrobromide.

Bevorzugte Vernetzer sind die nachfolgenden Verbindungen sowie deren Salze:
Diaminooxyethan, 1,2-Di-aminooxy-propan, 1,3-Di-aminooxy-propan, 1,2-Di-aminooxy-butan, 1,3-Di-aminooxy-butan, 1,4-Di-aminooxy-butan, 2,3-Di-aminooxy-butan, 1,2-Di-aminooxy-isobutan, 1,3-Di-aminooxy-isobutan, disubstituierte Aminooxy-Pentane und Aminooxy-Isopentane wie 1,5-Di-aminooxy-pentan, disubstituierte Aminooxy-Hexane und Aminooxy-Isohexane wie 1,6-Di-aminooxy-hexan, 1,4-Di-aminooxy-buten, Aminooxy-essigsäurehydrazid, 2-Aminooxy-propionsäurehydrazid, 3-Aminooxy-propionsäurehydrazid, 2-Methyl-2-aminooxy-propionsäurehydrazid, 2-Aminooxy-buttersäurehydrazid, 4-Aminooxy-buttersäurehydrazid, 2-Aminooxy-valeriansäurehydrazid, 5-Aminooxy-valeriansäurehydrazid, 2-Aminooxyönanthsäurehydrazid, 2-Aminooxycaprylsäurehydrazid, 2-Aminooxycaprinsäurehydrazid, 2-Aminooxylaurinsäurehydrazid, 2-Aminooxymyristinsäurehydrazid, 2-Aminooxypalmitinsäurehydrazid, 2-Aminooxystearinsäurehydrazid.

Besonders bevorzugte Vernetzer sind die nachfolgenden Verbindungen sowie deren Salze:
1,3-Di-aminooxy-propan, 1,4-Di-aminooxy-butan, Aminooxy-essigsäurehydrazid, 2-Aminooxy-propionsäurehydrazid und 2-Methyl-2-aminooxy-propionsäurehydrazid.
Insbesonders werden 1,3-Di-aminooxy-propan, 1,4-Di-aminooxy-butan und deren Salze bevorzugt.

Die Herstellung der genannten Vernetzer ist nach literaturbekannten Methoden möglich. So kann die Herstellung von einfach oder mehrfach aminooxy-substituierten Vernetzern durch Umsetzung von Ethylurethan mit den entsprechend einfach oder mehrfach halogen-substituierten Aliphaten, Alkylaromaten oder Siloxanen erfolgen (A. Fuller, J. Chem. Soc. 1947, 963). Gemischt substituierte Aminooxy-carbonsäurehydrazid-Verbindungen sind beispielsweise durch Umsetzung der Aminooxy-carbonsäureester, die nach Fuller herstellbar sind, mit Hydrazinhydrat zugänglich.

4

Die Herstellung der erfindungsgemäßen Dispersionen kann durch Abmischung der wäßrigen Dispersionen der carbonylgruppenhaltigen Copolymerisate mit den aminooxyfunktionellen Vernetzern erfolgen. Vorzugsweise werden die aminooxyfunktionellen Vernetzer in wäßriger Lösung vorgelegt oder zur Copolymerisatdispersion zugegeben. Besonders bevorzugt werden die Salze der aminooxyfunktionellen Vernetzer in wäßriger Lösung vorgelegt und die Copolymerisatdispersion zugegeben. Die Konzentration der aminooxyfunktionellen Vernetzer in der wäßrigen Lösung beträgt vorzugsweise von 20 bis 80 Gew%.

Die erfindungsgemäßen Dispersionen können als Bindemittel zur Herstellung von Überzügen, Beschichtungen und Imprägnierungen im Coating-Bereich eingesetzt werden. Beispiele hierfür sind die Verwendung als Beschichtungsmittel für flexible Substrate wie Leder, die Verwendung als Bindemittel in Papierstreichmassen, die Verwendung als Binder in aushärtenden Lacken und Anstrichstoffen. Die beanspruchten Dispersionen eignen sich auch als Bindemittel in Dichtungsmassen. Ein weiterer Anwendungsbereich ist die Verwendung als Klebemittel; beispielsweise zur Herstellung von Vliesstoffen und als Haftungsvermittler zwischen Klebstoffschicht und Substrat in der Glanzfolienkaschierung. Besonders geeignet sind die erfindungsgemäßen wäßrigen Dispersionen als Klebstoffe zum Bekleben von Corona- und Flamm-vorbehandelten Polyolefinoberflächen.

Im Vergleich zu den im Stand der Technik bekannten wäßrigen Dispersionen auf der Basis von vernetzbaren carbonylgruppenhaltigen Copolymeren zeichnen sich die erfindungsgemäßen Dispersionen dadurch aus, daß keine oder nur eine geringe Freisetzung von Hydrazin erfolgt. Die mit den erfindungsgemäßen Dispersionen hergestellten Verklebungen zeigen hohe Schälfestigkeiten und sehr gute Naßfestigkeit. Selbst nach einer Lagerzeit von über 5 Monaten sind keine Viskositätsveränderungen feststellbar, das heißt die Dispersionen sind über Monate lagerstabil.

Die nachfolgenden Beispiele dienen der weiteren Erläuterung der Erfindung:

Herstellung der carbonylgruppenhaltigen, wäßrigen Copolymer-Dispersionen:

Beispiel 1:

In einem mit drei Dosiergefäßen ausgestatteten Glaskolben wurden 1070 g einer wäßrigen Dispersion mit 52 Gew% eines Ethylen/Vinylacetat-Copolymeren (Ethylen-Gehalt: 25 Gew%) und 3.5 g Fe-Ammoniumsulfat-Lösung vorgelegt. In einem Dosiergefäß befanden sich als Initiatordosierung 2.88 g Kaliumpersulfat in 87 ml Wasser gelöst. In dem zweiten Dosiergefäß wurden als Initiatordosierung 1.65 g hydroxymethansulfinsaures Natrium (Brüggolit) in 87 ml Wasser gelöst. In dem dritten, mit Rührer ausgestatteten Dosiergefäß wurden 56 ml Wasser, 4.31 g Genapol X360 (Isotridecylpolyglykolether der Hoechst AG) als 25 %-ige wäßrige Lösung, 1.85 g Aerosol A102 (Sulfobernsteinsäurehalbester der Cyanamid GmbH) als 30 %-ige wäßrige Lösung, 111 g t-Butylacrylat und 27.8 g Diacetonacrylamid emulgiert.

Die Vorlage wurde unter Rühren auf 45 °C aufgeheizt. Nach Erreichen der Temperatur wurden die Initiatorlösungen mit einer Dosierrate von jeweils 20 g/h eingefahren. Sofort nach dem Dosierstart der Initiatorlösungen wurde die Voremulsion über einen Zeitraum von 4 Stunden zudosiert. Nach Beendigung der Dosierung wurde die Emulsion auf Raumtemperatur abgekühlt und durch ein 160 $\mu$m-Netz gesiebt. Die resultierende Dispersion hatte einen Festgehalt von 45 Gew%. Das Copolymerisat hatte folgende Zusammensetzung: 20 Gew% Ethylen, 60 Gew% Vinylacetat, 10 Gew% t-Butylacrylat, 4 Gew% Diacetonacrylamid.

Beispiel 2:

In einem 15 l Druckautoklaven wurden vorgelegt: 3.8 l vollentsalztes Wasser, 19.4 g Vinylsulfonat in 25 %-iger wäßriger Lösung, 3.2 g Fe-Ammoniumsulfat in 10 %-iger wäßriger Lösung, 84 g Aerosol A102 in 30 %-iger wäßriger Lösung, 83.5 g Genapol PF40 (Propylenoxid-Ethylenoxid-Copolymerisat der Hoechst AG) in 20 %-iger wäßriger Lösung, 49.0 g n-Butylacrylat und 429 g Vinylacetat. Als Initiatordosierungen wurden in einem Dosiergefäß 116 g Ammoniumpersulfat in 1.3 l Wasser gelöst, in einem weiteren Dosiergefäß 58.2 g Hydroxymethansulfinsaures Natrium (Brüggolit) in 1.2 l Wasser gelöst. Als Monomerdosierung wurden in einem Dosiergefäß 4.84 kg Vinylacetat bereitgestellt; in einem weiteren Dosiergefäß eine Mischung aus 0.62 kg Vinylacetat und 0.18 kg Diacetonacrylamid. Schließlich wurde in einem Dosiergefäß eine Voremulsion bestehend aus 355 g Wasser, 638 g N-Methylolacrylamid in 48 %-iger wäßriger Lösung, 55.7 g Acrylsäure und 790 g Genapol X360 in 25 %-iger wäßriger Lösung bereitet.

Die Vorlage wurde unter ständigem Rühren auf 45 °C erwärmt und nach Erreichen der Temperatur mit Ethylen unter einem Druck von 58 bar beschickt. Die Initiatorlösungen wurden mit Raten von 93 g/h (Ammoniumpersulfat) bzw. 82 g/h (Brüggolit) zudosiert bis der Reaktionsstart durch eine exotherme Wärmeentwicklung erkennbar war. Die Dosierraten wurden ab diesem Zeitpunkt auf 79 g/h bzw. 70 g/h umgestellt. Eine halbe Stunde nach Reaktionsstart wurde mit der Dosierung des Vinylacetats (Dosierzeit 5 Stunden) und der Voremulsion (Dosierzeit 6 Stunden) begonnen. Nach Beendigung der Vinylacetat-Dosierung wurde das Monomergemisch innerhalb einer Stunde zudosiert. Während zehn Minuten vor Ende der Voremulsions-Dosierung kein Ethylen mehr nachgedrückt wurde, erfolgte die Abschaltung der Initiator-Dosierungen erst eine halbe Stunde nach Beendigung der Dosierung der Voremulsion bzw. des Monomergemisches. Nach Beendigung der Polymerisation wurde die Dispersion mit $NH_3$ auf pH = 6 eingestellt und anschließend entspannt. Nach dem Entspannen wurde die Dispersion auf pH = 4.5 eingestellt. Die resultierende Dispersion hatte einen Festgehalt von 52 Gew%. Das Copolymerisat hatte folgende Zusammensetzung: 20 Gew% Ethylen, 72 Gew% Vinylacetat, 0.7 Gew% n-Butylacrylat, 0.05 Gew% Vinylsulfonat, 4.1 Gew% N-Methylolacrylamid, 0.75 Gew% Acrylsäure, 2.4 Gew% Diacetonacrylamid.

Herstellung der Aminooxy-substituierten Vernetzer:

Beispiel 3:

1,3-Diaminooxy-propan-monohydrochlorid

Die Herstellung erfolgte analog der von Fuller, J.Chem.Soc. 1947, 963 angegebenen Methode.

Beispiel 4:

1,4-Diaminooxy-butan-monohydrochlorid

Herstellung analog Beispiel 3.

Beispiel 5:

60 g Aminooxyessigsäureethylester, 32 g 80 %-iges wäßriges Hydrazin-Hydrat und 300 ml Ethanol wurden 7 Stunden unter Rückfluß erhitzt. Nach dem Abziehen der flüchtigen Bestandteile bei 11 mbar und 50°C Badtemperatur am Rotationsverdampfer verblieben 51 g leicht gelblicher Feststoff mit 92 % Aminooxyessigsäurehydrazid.

Beispiel 6:

8.4 g 2-Aminooxy-isobuttersäure-ethylester wurden mit 3.6 g 80 %-igem Hydrazinhydrat und 20 ml Ethanol 15 Stunden unter Rückfluß erhitzt. Dann wurden die flüchtigen Bestandteile am Rotationsverdampfer abgezogen. Es verblieben 6.9 g gelbliches Öl mit einem Gehalt von 78 % 2- Aminooxy-isobuttersäurehydrazid.

Mischung der erfindungsgemäßen, Vernetzer enthaltenden, Dispersionen:

Beispiel 7:

0.5 g 1.3-Diaminooxypropan-monohydrochlorid (Beispiel 3) wurden in 0.3 g Wasser gelöst. Unter Rühren wurden 40 g der Dispersion gemäß Beispiel 1 zugegeben. Der Festgehalt betrug 45 %.

Beispiel 8:

1.64 g einer 32 %-igen wäßrigen Lösung von 1,4-Diaminooxy-butan-monohydrochlorid (Beispiel 4) wurden vorgelegt. Unter Rühren wurden 40 g der Dispersion gemäß Beispiel 1 zugegeben. Der Festgehalt betrug 45 %.

Beispiel 9:

1.13 g einer 50 %-igen wäßrigen Lösung von 2-Aminooxyisobuttersäurehydrazid (Beispiel 5) wurden vorgelegt und unter Rühren 40 g der Dispersion gemäß Beispiel 1 zugegeben. Der Festgehalt betrug 45 Gew%.

Vergleichsbeispiele:

Vergleichsbeispiel 1:

3.69 g Adipinsäuredihydrazid wurden in 3.62 g Wasser gelöst. Unter Rühren wurden 200 g der Dispersion aus Beispiel 1 zugegeben. Der Festgehalt betrug 45 Gew%.

Vergleichsbeispiel 2:

Als Blindprobe wurde die Dispersion aus Beispiel 1 ohne weitere Zusätze an Vernetzer eingesetzt. Der Festgehalt betrug 45 Gew%.

Anwendungstechnische Prüfung der erfindungsgemäßen Dispersionen als Bindemittel in Kaschierklebstoffen:

Eine Polyethylenfolie mit 50 $\mu$m Dicke der Firma 4P-Folie, Forchheim, wurde mit einem Entladungsstab der Firma Softal electronic (Typ: HR-1R AB 300) mittels Corona-Entladung behandelt. Die beispielsgemäßen vernetzerhaltigen Dispersionen und die Dispersionen der Vergleichsbeispiele wurden auf die vorbehandelte Folienseite in einer Schichtdicke von 12 $\mu$m naß, entsprechend 5.7 g/m$^2$ trocken, aufgetragen. Anschliessend wurde 5 Minuten bei 70°C getrocknet und mit einer zweiten vorbehandelten Polyethylenfolie der obengenannten Spezifikation abgedeckt. Zur Verbundherstellung wurden die Folien 3 Sekunden bei 80°C und 3 bar gesiegelt. Nach Lagerung der Verbunde gemäß den nachfolgend beschriebenen Lagerzyklen wurde die Verbundfestigkeit mittels Bestimmung der Schälfestigkeit ermittelt.

Lagerzyklen:

Lagerung unter Normklima:

Die Verbunde wurden 5 Minuten, 15 Minuten, 30 Minuten, 1 Stunde, 5 Stunden und 48 Stunden unter Normklima (23°C, 50 % relative Luftfeuchtigkeit) gelagert.

Wasserlagerung:

Die Verbunde wurden 5 Stunden unter Normklima gelagert, anschließend 30 Minuten im kochenden Wasser, dann 1 Stunde im kalten Wasser (23°C) gelagert (= Kochtest 5 h RT).
Lagerung wie beim Kochtest 5 h RT, nur, daß nicht 5 Stunden, sondern 48 Stunden unter Normklima gelagert wurde (= Kochtest 48 h RT).

Bestimmung der Schälfestigkeit:

Nach entsprechender Lagerung wurden die Verbunde in 2 cm breite Prüfstreifen geschnitten. Die Prüfstreifen wurden in einer Zugprüfmaschine (Materialprüfmaschine 1445 der Firma Zwick) eingespannt und die Verbunde durch Abziehen in einem Winkel von 180° mit einer Geschwindigkeit von 300 mm/min getrennt. Die Schälfestigkeit ist die dazu aufzuwendende Kraft in N/cm.

Bestimmung der Schälfestigkeit nach Temperatureinwirkung (Tempern):

Die Verbunde wurden 30 Minuten bei 70°C getempert, dann 7 Stunden unter Normklima gelagert und anschließend die Schälfestigkeit bestimmt (= Tempern-Normklima). In einem weiteren Test wurden die Verbunde 30 Minuten bei 70°C getempert, dann 5 Stunden unter Normklima gelagert, anschließend 30 Minuten in kochendem Wasser und schließlich 1 Stunde in kaltem Wasser (23°C) gelagert, bevor die Schälfestigkeit bestimmt wurde (= Tempern-Kochtest).
In Tabelle 1 sind die Meßwerte für die Schälfestigkeit nach Lagerung der Prüfkörper bei Normklima und für Tempern-Normklima aufgeführt.
In Tabelle 2 sind die Meßwerte für die Schälfestigkeit der Prüfkörper nach Wasserlagerung und für Tempern-Kochtest aufgeführt.

7

Tabelle 1: Schälfestigkeit nach Lagerung bei Normklima in N/cm

| Lagerzeit / Versuch | 5 min | 15 min | 30 min | 1 h | 5 h | 48 h | Tempern |
|---|---|---|---|---|---|---|---|
| Beispiel 7 | 1.62 | 1.20 | 1.87 | 1.35 | 1.30 | 2.50 | 3.10 |
| Beispiel 8 | 1.10 | 1.40 | 1.10 | 1.30 | 1.70 | 2.67 | 2.19 |
| Beispiel 9 | 1.39 | 1.25 | 1.10 | 1.30 | 1.43 | 1.80 | 2.07 |
| Vergl.bsp. 1 | 1.50 | 1.80 | 1.90 | 2.17 | 1.70 | 2.76 | 2.48 |
| Vergl.bsp. 2 | 0.86 | 0.60 | 0.62 | 0.60 | 0.60 | 0.63 | 0.81 |

**Tabelle 2: Schälfestigkeit nach Wasserlagerung in N/cm**

| Versuch \ Lagerung | Kochtest 5 h RT | Kochtest 48 h RT | Tempern-Kochtest |
|---|---|---|---|
| Beispiel 7 | 1.29 | 1.40 | 1.28 |
| Beispiel 8 | 1.62 | 1.56 | 1.53 |
| Beispiel 9 | 1.56 | 1.68 | 1.90 |
| Vergl.bsp. 1 | 1.23 | 1.71 | 1.71 |
| Vergl.bsp. 2 | 0.00 | 0.00 | 0.00 |

**Patentansprüche**

**Patentansprüche für folgende Vertragsstaaten : DE, FR, GB, IT, NL, SE**

1. Aminooxy-Vernetzer enthaltende wäßrige Dispersionen von Carbonylgruppen enthaltenden Copolymerisaten enthaltend

   A) 30 bis 70 Gew%, bezogen auf das Gesamtgewicht der Dispersion, eines Copolymerisats zusammengesetzt aus

70 bis 99.9 Gew% eines oder mehrerer Comonomerer aus der Gruppe der (Meth)acrylsäureester von Alkoholen mit 1 bis 10 C-Atomen, Vinylester von gesättigten aliphatischen Carbonsäuren mit 2 bis 10 C-Atomen, Olefine, Vinylaromaten, Vinylhalogenide und/oder Vinylether und

0.1 bis 30 Gew% eines oder mehrerer carbonylgruppenhaltiger ethylenisch ungesättigter Comonomere aus der Gruppe der $\alpha,\beta$-ethylenisch-ungesättigten Aldehyde, Alkylvinylketone, Ketocarbonsäurevinylester, N-Keto-acrylamide, Diketen, Kohlenmonoxid und Acetoacetoxyethyl(meth)acrylat, und

B) 0.1 bis 10 Mol, pro Mol Carbonylgruppen im Copolymerisat A, eines Aminooxy-Vernetzers der allgemeinen Formel

$$(H_2NO)_mR(CONHNH_2)_n$$

wobei R für einen substituierten oder unsubstituierten aliphatischen oder aromatischen Kohlenwasserstoffrest oder einen Organosiloxanrest steht,

$m \geq 1$ und $n = 0$ oder 1, und $m + n \leq 3$ ist oder

dessen Salz mit einem Anion einer organischen oder anorganischen Säure.

2. Wäßrige Dispersionen nach Anspruch 1, dadurch gekennzeichnet, daß der Gehalt an carbonylgruppenhaltigen ethylenisch ungesättigten Comonomeren 0.1 bis 20 Gew%, bezogen auf das Copolymerisat, beträgt.

3. Wäßrige Dispersionen nach Anspruch 1, dadurch gekennzeichnet, daß der Gehalt an carbonylgruppenhaltigen ethylenisch ungesättigten Comonomeren 0.5 bis 5 Gew%, bezogen auf das Copolymerisat, beträgt.

4. Wäßrige Dispersionen nach Anspruch 1, 2 oder 3, dadurch gekennzeichnet, daß noch bis zu 10 Gew%, bezogen auf das Copolymerisat, ethylenisch ungesättigte, funktionelle Comonomere enthalten sind.

5. Wäßrige Dispersionen nach Anspruch 1, 2, 3 oder 4, dadurch gekennzeichnet, daß als carbonylgruppenhaltige ethylenisch ungesättigte Comonomere Acrolein, Methacrolein, Crotonaldehyd, Formylstyrol, Vinylmethylketon, Vinylethylketon, Lävulinsäurevinylester, Acetoacetoxyethylacrylat, Acetoacetoxyethylmethacrylat, Kohlenmonoxid oder Diacetonacrylamid enthalten sind.

6. Wäßrige Dispersionen nach Anspruch 1, 2, 3 oder 4, dadurch gekennzeichnet, daß als carbonylgruppenhaltige ethylenisch ungesättigte Comonomere Diacetonacrylamid, Crotonaldehyd, Methacrolein, Acetoacetoxyethylacrylat oder Acetoacetoxyethylmethacrylat enthalten sind.

7. Wäßrige Dispersionen nach Anspruch 1, 2, 3, 4, 5 oder 6, dadurch gekennzeichnet, daß als Copolymerisate A Copolymerisate auf der Basis von Ethylen-Vinylchlorid-Copolymeren mit einem Ethylen-Gehalt von vorzugsweise 10 bis 50 Gew% und einem Vinylchlorid-Gehalt von 50 bis 90 Gew%, Copolymerisate auf der Basis von Ethylen-Vinylester-Copolymeren, insbesonders Ethylen-Vinylacetat-Copolymeren, mit einem Ethylen-Gehalt von vorzugsweise 10 bis 50 Gew% und einem Vinylester-Gehalt von 50 bis 90 Gew%, Copolymerisate auf der Basis von Ethylen-Vinylester-(Meth)acrylsäureester-Copolymeren mit einem Ethylen-Gehalt von 10 bis 50 Gew%, einem Vinylester-Gehalt von 50 bis 90 Gew% und einem (Meth)acrylsäureester-Gehalt von 5 bis 20 Gew%, Copolymerisate auf der Basis der genannten Ethylen/Vinylchlorid-, Ethylen/Vinylacetat- und Ethylen/Vinylacetat/(Meth)acrylat-Polymerisate mit einem Gehalt von bis zu 10 Gew% an N-Methylolacrylamid, Acrylsäure, Vinylsulfonat und/oder 2-Hydroxypropylacrylat, Copolymerisate auf der Basis von (Meth)acrylsäureester mit Methylmethacrylat, Butylacrylat und/oder Ethylhexylacrylat verwendet werden, wobei sich die Angaben in Gew% auf das Gesamtgewicht des Copolymerisats A beziehen und sich auf jeweils 100 Gew% addieren.

8. Wäßrige Dispersionen nach Anspruch 1, 2, 3, 4, 5, 6 oder 7, dadurch gekennzeichnet, daß zur Vernetzung 0.3 bis 4 Mol, pro Mol Carbonylgruppen im Copolymerisat A, des Aminooxy-Vernetzers eingesetzt werden.

9. Wäßrige Dispersionen nach Anspruch 1, 2, 3, 4, 5, 6, 7 oder 8, dadurch gekennzeichnet, daß als Vernetzer difunktionelle Verbindungen der Formel $(H_2NO)_mR(CONHNH_2)_n$ mit $m \geq 1$, $n = 0$ oder 1 eingesetzt werden.

**10.** Wäßrige Dispersionen nach Anspruch 9, dadurch gekennzeichnet, daß mit jeweils einer Aminooxy-Gruppe und einer Hydrazid-Gruppe substituierte Verbindungen der Formel $(H_2NO)R(CONHNH_2)$ eingesetzt werden.

**11.** Wäßrige Dispersionen nach Anspruch 9, dadurch gekennzeichnet, daß Vernetzer mit zwei Aminooxy-Gruppen der Formel $(H_2NO)_2R$ eingesetzt werden.

**12.** Wäßrige Dispersionen nach Anspruch 9, dadurch gekennzeichnet, daß als Vernetzer Diaminooxyethan, 1,2-Di-aminooxy-propan, 1,3-Di-aminooxy-propan, 1,2-Di-aminooxy-butan, 1,3-Di-aminooxy-butan, 1,4-Di-aminooxy-butan, 2,3-Di-aminooxy-butan, 1,2-Di-aminooxy-isobutan, 1,3-Di-aminooxy-isobutan, disubstituierte Aminooxy-Pentane und Aminooxy-Isopentane wie 1,5-Di-aminooxy-pentan, disubstituierte Aminooxy-Hexane und Aminooxy-Isohexane wie 1,6-Di-aminooxy-hexan, 1,4-Di-aminooxy-buten, Aminooxy-essigsäurehydrazid, 2-Aminooxy-propionsäurehydrazid, 3-Aminooxy-propionsäurehydrazid, 2-Methyl-2-aminooxypropionsäurehydrazid, 2-Aminooxy-buttersäurehydrazid, 4-Aminooxy-buttersäurehydrazid, 2-Aminooxy-valeriansäurehydrazid, 5-Aminooxy-valeriansäurehydrazid, 2-Aminooxy-önanthsäurehydrazid, 2-Aminooxycaprylsäurehydrazid, 2-Aminooxycaprinsäurehydrazid, 2-Aminooxylaurinsäurehydrazid, 2-Aminooxymyristinsäurehydrazid, 2-Aminooxypalmitinsäurehydrazid, 2-Aminooxy-stearinsäurehydrazid oder deren Salze eingesetzt werden.

**13.** Wäßrige Dispersionen nach Anspruch 9, dadurch gekennzeichnet, daß als Vernetzer 1,3-Di-aminooxy-propan, 1,4-Di-aminooxy-butan, Aminooxy-essigsäurehydrazid, 2-Aminooxypropionsäurehydrazid und 2-Methyl-2-aminooxypropionsäurehydrazid oder deren Salze eingesetzt werden.

**14.** Wäßrige Dispersionen nach Anspruch 9, dadurch gekennzeichnet, daß als Vernetzer 1,3-Di-aminooxy-propan, 1,4-Di-aminooxy-butan oder deren Salze eingesetzt werden.

**15.** Verfahren zur Herstellung von wäßrigen Dispersionen nach Anspruch 1 bis 14, dadurch gekennzeichnet, daß die aminooxyfunktionellen Vernetzer in wäßriger Lösung vorgelegt oder zur Copolymerisatdispersion zugegeben werden.

**16.** Verfahren nach Anspruch 15, dadurch gekennzeichnet, daß die aminooxyfunktionellen Vernetzer in wäßriger Lösung vorgelegt und die Copolymerisatdispersion zugegeben wird.

**17.** Verwendung von wäßrigen Dispersionen nach Anspruch 1 bis 16 als Bindemittel zur Herstellung von Überzügen, Beschichtungen und Imprägnierungen im Coating-Bereich.

**18.** Verwendung von wäßrigen Dispersionen nach Anspruch 1 bis 16 als Bindemittel in Dichtungsmassen.

**19.** Verwendung von wäßrigen Dispersionen nach Anspruch 1 bis 16 als Klebemittel.

**20.** Verwendung von wäßrigen Dispersionen nach Anspruch 19, dadurch gekennzeichnet, daß diese zur Herstellung von Vliesstoffen eingesetzt werden.

**21.** Verwendung von wäßrigen Dispersionen nach Anspruch 19, dadurch gekennzeichnet, daß diese als Haftungsvermittler zwischen Klebstoffschicht und Substrat bei Verklebungen eingesetzt werden.

**22.** Verwendung von wäßrigen Dispersionen nach Anspruch 19, dadurch gekennzeichnet, daß diese als Klebstoffe zum Bekleben von Corona- und Flamm-vorbehandelten Polyolefinoberflächen eingesetzt werden.

**Patentansprüche für folgenden Vertragsstaat : ES**

**1.** Verfahren zur Herstellung von Aminooxy-Vernetzer enthaltenden wäßrigen Dispersionen von Carbonylgruppen enthaltenden Copolymerisaten enthaltend

A) 30 bis 70 Gew%, bezogen auf das Gesamtgewicht der Dispersion, eines Copolymerisats zusammengesetzt aus
70 bis 99.9 Gew% eines oder mehrerer Comonomerer aus der Gruppe der (Meth)acrylsäureester von Alkoholen mit 1 bis 10 C-Atomen, Vinylester von gesättigten aliphatischen Carbonsäuren mit 2 bis 10 C-Atomen, Olefine, Vinylaromaten, Vinylhalogenide und/oder Vinylether und

0.1 bis 30 Gew% eines oder mehrerer carbonylgruppenhaltiger ethylenisch ungesättigter Comonomere aus der Gruppe der $\alpha,\beta$-ethylenisch-ungesättigten Aldehyde, Alkylvinylketone, Ketocarbonsäurevinylester, N-Keto-acrylamide, Diketen, Kohlenmonoxid und Acetoacetoxyethyl(meth)acrylat, und

B) 0.1 bis 10 Mol, pro Mol Carbonylgruppen im Copolymerisat A, eines Aminooxy-Vernetzers der allgemeinen Formel $(H_2NO)_mR(CONHNH_2)n$ wobei R für einen substituierten oder unsubstituierten aliphatischen oder aromatischen Kohlenwasserstoffrest oder einen Organosiloxanrest steht, $m \geqq 1$ und $n = 0$ oder 1, und $m + n \leqq 3$ ist oder dessen Salz mit einem Anion einer organischen oder anorganischen Säure,

wobei die aminooxyfunktionellen Vernetzer in wäßriger Lösung vorgelegt oder zur Copolymerisatdispersion zugegeben werden.

2. Verfahren nach Anspruch 1, dadurch gekennzeichnet, daß der Gehalt an carbonylgruppenhaltigen ethylenisch ungesättigten Comonomeren 0.1 bis 20 Gew%, bezogen auf das Copolymerisat, beträgt.

3. Verfahren nach Anspruch 1, dadurch gekennzeichnet, daß der Gehalt an carbonylgruppenhaltigen ethylenisch ungesättigten Comonomeren 0.5 bis 5 Gew%, bezogen auf das Copolymerisat, beträgt.

4. Verfahren nach Anspruch 1, 2 oder 3, dadurch gekennzeichnet, daß noch bis zu 10 Gew%, bezogen auf das Copolymerisat, ethylenisch ungesättigte, funktionelle Comonomere enthalten sind.

5. Verfahren nach Anspruch 1, 2, 3 oder 4, dadurch gekennzeichnet, daß als carbonylgruppenhaltige ethylenisch ungesättigte Comonomere Acrolein, Methacrolein, Crotonaldehyd, Formylstyrol, Vinylmethylketon, Vinylethylketon, Lävulinsäurevinylester, Acetoacetoxyethylacrylat, Acetoacetoxyethylmethacrylat, Kohlenmonoxid oder Diacetonacrylamid enthalten sind.

6. Verfahren nach Anspruch 1, 2, 3 oder 4, dadurch gekennzeichnet, daß als carbonylgruppenhaltige ethylenisch ungesättigte Comonomere Diacetonacrylamid, Crotonaldehyd, Methacrolein, Acetoacetoxyethylacrylat oder Acetoacetoxyethylmethacrylat enthalten sind.

7. Verfahren nach Anspruch 1, 2, 3, 4, 5 oder 6, dadurch gekennzeichnet, daß als Copolymerisate A Copolymerisate auf der Basis von Ethylen-Vinylchlorid-Copolymeren mit einem Ethylen-Gehalt von vorzugsweise 10 bis 50 Gew% und einem Vinylchlorid-Gehalt von 50 bis 90 Gew%, Copolymerisate auf der Basis von Ethylen-Vinylester-Copolymeren, insbesonders Ethylen-Vinylacetat-Copolymeren, mit einem Ethylen-Gehalt von vorzugsweise 10 bis 50 Gew% und einem Vinylester-Gehalt von 50 bis 90 Gew%, Copolymerisate auf der Basis von Ethylen-Vinylester-(Meth)acrylsäureester-Copolymeren mit einem Ethylen-Gehalt von 10 bis 50 Gew%, einem Vinylester-Gehalt von 50 bis 90 Gew% und einem (Meth)acrylsäureester-Gehalt von 5 bis 20 Gew%, Copolymerisate auf der Basis der genannten Ethylen/Vinylchlorid-, Ethylen/Vinylacetat- und Ethylen/Vinylacetat/(Meth)acrylat-Polymerisate mit einem Gehalt von bis zu 10 Gew% an N-Methylolacrylamid, Acrylsäure, Vinylsulfonat und/oder 2-Hydroxypropylacrylat, Copolymerisate auf der Basis von (Meth)acrylsäureester mit Methylmethacrylat, Butylacrylat und/oder Ethylhexylacrylat verwendet werden, wobei sich die Angaben in Gew% auf das Gesamtgewicht des Copolymerisats A beziehen und sich auf jeweils 100 Gew% addieren.

8. Verfahren nach Anspruch 1, 2, 3, 4, 5, 6 oder 7, dadurch gekennzeichnet, daß zur Vernetzung 0.3 bis 4 Mol, pro Mol Carbonylgruppen im Copolymerisat A, des Aminooxy-Vernetzers eingesetzt werden.

9. Verfahren nach Anspruch 1, 2, 3, 4, 5, 6, 7 oder 8, dadurch gekennzeichnet, daß als Vernetzer difunktionelle Verbindungen der Formel $(H_2NO)_mR(CONHNH_2)_n$ mit $m \geqq 1$, $n = 0$ oder 1 eingesetzt werden.

10. Verfahren nach Anspruch 9, dadurch gekennzeichnet, daß mit jeweils einer Aminooxy-Gruppe und einer Hydrazid-Gruppe substituierte Verbindungen der Formel $(H_2NO)R(CONHNH_2)$ eingesetzt werden.

11. Verfahren nach Anspruch 9, dadurch gekennzeichnet, daß Vernetzer mit zwei Aminooxy-Gruppen der Formel $(H_2NO)_2R$ eingesetzt werden.

**12.** Verfahren nach Anspruch 9, dadurch gekennzeichnet, daß als Vernetzer Diaminooxyethan, 1,2-Di-aminooxy-propan, 1,3-Di-aminooxy-propan, 1,2-Di-aminooxy-butan, 1,3-Di-aminooxy-butan, 1,4-Di-aminooxy-butan, 2,3-Di-aminooxy-butan, 1,2-Di-aminooxy-isobutan, 1,3-Di-aminooxy-isobutan, disubstituierte Aminooxy-Pentane und Aminooxy-Isopentane wie 1,5-Di-aminooxy-pentan, disubstituierte Aminooxy-Hexane und Aminooxy-Isohexane wie 1,6-Di-aminooxy-hexan, 1,4-Di-aminooxy-buten, Aminooxy-essigsäurehydrazid, 2-Aminooxy-propionsäurehydrazid, 3-Aminooxy-propionsäurehydrazid, 2-Methyl-2-aminooxy-propionsäurehydrazid, 2-Aminooxy-buttersäurehydrazid, 4-Aminooxy-buttersäurehydrazid, 2-Aminooxy-valeriansäurehydrazid, 5-Aminooxy-valeriansäurehydrazid, 2-Aminooxy-önanthsäurehydrazid, 2-Aminooxycaprylsäurehydrazid, 2-Aminooxycaprinsäurehydrazid, 2-Aminooxylaurinsäurehydrazid, 2-Aminooxymyristinsäurehydrazid, 2-Aminooxypalmitinsäurehydrazid, 2-Aminooxy-stearinsäurehydrazid oder deren Salze eingesetzt werden.

**13.** Verfahren nach Anspruch 9, dadurch gekennzeichnet, daß als Vernetzer 1,3-Di-aminooxy-propan, 1,4-Di-aminooxy-butan, Aminooxy-essigsäurehydrazid, 2-Aminooxypropionsäurehydrazid und 2-Methyl-2-aminooxy-propionsäurehydrazid oder deren Salze eingesetzt werden.

**14.** Verfahren nach Anspruch 9, dadurch gekennzeichnet, daß als Vernetzer 1,3-Di-aminooxy-propan, 1,4-Di-aminooxy-butan oder deren Salze eingesetzt werden.

**15.** Verfahren nach Anspruch 1 bis 14, dadurch gekennzeichnet, daß die aminooxyfunktionellen Vernetzer in wäßriger Lösung vorgelegt und die Copolymerisatdispersion zugegeben wird.

**16.** Verwendung von wäßrigen Dispersionen hergestellt nach Anspruch 1 bis 15 als Bindemittel zur Herstellung von Überzügen, Beschichtungen und Imprägnierungen im Coating-Bereich.

**17.** Verwendung von wäßrigen Dispersionen hergestellt nach Anspruch 1 bis 15 als Bindemittel in Dichtungsmassen.

**18.** Verwendung von wäßrigen Dispersionen hergestellt nach Anspruch 1 bis 15 als Klebemittel.

**19.** Verwendung von wäßrigen Dispersionen nach Anspruch 18, dadurch gekennzeichnet, daß diese zur Herstellung von Vliesstoffen eingesetzt werden.

**20.** Verwendung von wäßrigen Dispersionen nach Anspruch 18, dadurch gekennzeichnet, daß diese als Haftungsvermittler zwischen Klebstoffschicht und Substrat bei Verklebungen eingesetzt werden.

**21.** Verwendung von wäßrigen Dispersionen nach Anspruch 18, dadurch gekennzeichnet, daß diese als Klebstoffe zum Bekleben von Corona- und Flamm-vorbehandelten Polyolefinoberflächen eingesetzt werden.

**Claims**
**Claims for the following contracting states : DE, FR, GB, IT, NL, SE**

**1.** Aqueous dispersions, containing aminooxy crosslinking agents, of copolymers containing carbonyl groups, comprising

A) 30 to 70% by weight, relative to the total weight of the dispersion, of a copolymer composed of 70 to 99.9% by weight of one or more comonomers from the group consisting of (meth)acrylates of alcohols having 1 to 10 carbon atoms, vinyl esters of saturated aliphatic carboxylic acids having 2 to 10 carbon atoms, olefins, vinylaromatics, vinyl halides and/or vinyl ethers, and 0.1 to 30% by weight of one or more ethylenically unsaturated comonomers, containing carbonyl groups, from the group consisting of ethylenically $\alpha,\beta$-unsaturated aldehydes, alkyl vinyl ketones, vinyl ketocarboxylates, N-keto-acrylamides, diketene, carbon monoxide and acetoacetoxyethyl (meth)acrylate, and

B) 0.1 to 10 mol, per mol of carbonyl groups in the copolymer A, of an aminooxy crosslinking agent of the general formula

$$(H_2NO)_mR(CONHNH_2)_n$$

where R is a substituted or unsubstituted aliphatic or aromatic hydrocarbon radical or an or-

EP 0 516 074 B1

ganosiloxane radical, m ≥ 1 and n = 0 or 1, and m + n ≤ 3, or a salt thereof with an anion of an organic or inorganic acid.

2. Aqueous dispersions according to Claim 1, characterized in that the content of ethylenically unsaturated comonomers containing carbonyl groups is 0.1 to 20% by weight, relative to the copolymer.

3. Aqueous dispersions according to Claim 1, characterized in that the content of ethylenically unsaturated comonomers containing carbonyl groups is 0.5 to 5% by weight, relative to the copolymer.

4. Aqueous dispersions according to Claim 1, 2 or 3, characterized in that up to 10% by weight, relative to the copolymer, of ethylenically unsaturated functional comonomers are also present.

5. Aqueous dispersions according to Claim 1, 2, 3 or 4, characterized in that acrolein, methacrolein, crotonaldehyde, formylstyrene, vinyl methyl ketone, vinyl ethyl ketone, vinyl levulinate, acetoacetoxyethyl acrylate, acetoacetoxyethyl methacrylate, carbon monoxide or diacetone-acrylamide are present as the ethylenically unsaturated comonomers containing carbonyl groups.

6. Aqueous dispersions according to Claim 1, 2, 3 or 4, characterized in that diacetone-acrylamide, crotonaldehyde, methacrolein, acetoacetoxyethyl acrylate or acetoacetoxyethyl methacrylate are present as the ethylenically unsaturated comonomers containing carbonyl groups.

7. Aqueous dispersions according to Claim 1, 2, 3, 4, 5 or 6, characterized in that the copolymers A used are copolymers based on ethylene/vinyl chloride copolymers having an ethylene content of preferably 10 to 50% by weight and a vinyl chloride content of 50 to 90% by weight, copolymers based on ethylene/vinyl ester copolymers, especially ethylene/vinyl acetate copolymers, having an ethylene content of preferably 10 to 50% by weight and a vinyl ester content of 50 to 90% by weight, copolymers based on ethylene/vinyl ester/(meth)acrylate copolymers having an ethylene content of 10 to 50% by weight, a vinyl ester content of 50 to 90% by weight and a (meth)acrylate content of 5 to 20% by weight, copolymers based on the said ethylene/vinyl chloride, ethylene/vinyl acetate and ethylene/vinyl acetate/(meth)acrylate polymers having a content of up to 10% by weight of N-methylolacrylamide, acrylic acid, vinylsulphonate and/or 2-hydroxypropyl acrylate, copolymers based on (meth)acrylates with methyl methacrylate, butyl acrylate and/or ethylhexyl acrylate, the % by weight data relating to the total weight of the copolymer A and always adding up to 100% by weight.

8. Aqueous dispersions according to Claim 1, 2, 3, 4, 5, 6 or 7, characterized in that 0.3 to 4 mol, per mol of carbonyl groups in copolymer A, of the aminooxy crosslinking agent are used for the crosslinking.

9. Aqueous dispersions according to Claim 1, 2, 3, 4, 5, 6, 7 or 8, characterized in that difunctional compounds of the formula $(H_2NO)_mR(CONHNH_2)_n$ with m ≥ 1, n = 0 or 1, are used as crosslinking agents.

10. Aqueous dispersions according to Claim 9, characterized in that compounds of the formula $(H_2NO)R$-$(CONHNH_2)$ each substituted with one aminooxy group and one hydrazide group are used.

11. Aqueous dispersions according to Claim 9, characterized in that crosslinking agents having two aminooxy groups of the formula $(H_2NO)_2R$ are used.

12. Aqueous dispersions according to Claim 9, characterized in that the crosslinking agents used are diaminooxyethane, 1,2-diaminooxy-propane, 1,3-diaminooxy-propane, 1,2-diaminooxy-butane, 1,3-diaminooxy-butane, 1,4-diaminooxy-butane, 2,3-diaminooxy-butane, 1,2-diaminooxy-isobutane, 1,3-diaminooxy-isobutane, disubstituted aminooxy-pentanes and aminooxy-isopentanes such as 1,5-diaminooxy-pentane, disubstituted aminooxy-hexanes and aminooxy-isohexanes such as 1,6-diaminooxy-hexane, 1,4-diaminooxy-butene, aminooxy-acetohydrazide, 2-aminooxy-propionohydrazide, 3-aminooxy-propionohydrazide, 2-methyl-2-aminooxy-propionohydrazide, 2-aninooxy-butyrohydrazide, 4-aminooxy-butyrohydrazide, 2-aminooxy-valerohydrazide, 5-aminooxy-valerohydrazide, 2-aminooxy-enanthohydrazide, 2-aminooxy-caprylohydrazide, 2-aminooxy-caprinohydrazide, 2-aminooxy-laurohydrazide, 2-aminooxy-myristohydrazide, 2-aminooxy-palmitohydrazide and 2-aminooxy-stearohydrazide or salts thereof.

14

13. Aqueous dispersions according to Claim 9, characterized in that the crosslinking agents used are 1,3-diaminooxy-propane, 1,4-diaminooxy-butane, aminooxy-acetohydrazide, 2-aminooxy-propionohydrazide and 2-methyl-2-aminooxy-propionohydrazide or salts thereof.

14. Aqueous dispersions according to Claim 9, characterized in that the crosslinking agents used are 1,3-diaminooxy-propane, 1,4-diaminooxy-butane or salts thereof.

15. Process for preparing aqueous dispersions according to any of Claims 1 to 14, characterized in that the aminooxy-functional crosslinking agents are first introduced in aqueous solution or added to the copolymer dispersion.

16. Process according to Claim 15, characterized in that the aminooxy-functional crosslinking agents are first introduced in aqueous solution and the copolymer dispersion is added.

17. The use of aqueous dispersions according to any of Claims 1 to 16 as binders for producing coverings, coatings and impregnations in the coatings field.

18. The use of aqueous dispersions according to any of Claims 1 to 16 as binders in sealing compounds.

19. The use of aqueous dispersions according to any of Claims 1 to 16 as adhesives.

20. The use of aqueous dispersions according to Claim 19, characterized in that these are used for producing non-woven materials.

21. The use of aqueous dispersions according to Claim 19, characterized in that these are used as adhesion promoters between the adhesive layer and the substrate in adhesive bonds.

22. The use of aqueous dispersions according to Claim 19, characterized in that these are used as adhesives for bonding to corona- and flame-pretreated polyolefin surfaces.

**Claims for the following contracting state : ES**

1. Process for preparing aqueous dispersions, containing aminooxy crosslinking agents, of copolymers containing carbonyl groups, comprising

   A) 30 to 70% by weight, relative to the total weight of the dispersion, of a copolymer composed of 70 to 99.9% by weight of one or more comonomers from the group consisting of (meth)acrylates of alcohols having 1 to 10 carbon atoms, vinyl esters of saturated aliphatic carboxylic acids having 2 to 10 carbon atoms, olefins, vinylaromatics, vinyl halides and/or vinyl ethers, and 0.1 to 30% by weight of one or more ethylenically unsaturated comonomers, containing carbonyl groups, from the group consisting of ethylenically $\alpha,\beta$-unsaturated aldehydes, alkyl vinyl ketones, vinyl ketocarboxylates, N-keto-acrylamides, diketene, carbon monoxide and acetoacetoxyethyl (meth)acrylate, and

   B) 0.1 to 10 mol, per mol of carbonyl groups in the copolymer A, of an aminooxy crosslinking agent of the general formula $(H_2NO)_mR(CONHNH_2)_n$ where R is a substituted or unsubstituted aliphatic or aromatic hydrocarbon radical or an organosiloxane radical, $m \geq 1$ and $n = 0$ or $1$, and $m + n \leq 3$, or a salt thereof with an anion of an organic or inorganic acid, the aminooxy-functional crosslinking agents being first introduced in aqueous solution or added to the copolymer dispersion.

2. Process according to Claim 1, characterized in that the content of ethylenically unsaturated comonomers containing carbonyl groups is 0.1 to 20% by weight, relative to the copolymer.

3. Process according to Claim 1, characterized in that the content of ethylenically unsaturated comonomers containing carbonyl groups is 0.5 to 5% by weight, relative to the copolymer.

4. Process according to Claim 1, 2 or 3, characterized in that up to 10% by weight, relative to the copolymer, of ethylenically unsaturated functional comonomers are also present.

5. Process according to Claim 1, 2, 3 or 4, characterized in that acrolein, methacrolein, crotonaldehyde, formylstyrene, vinyl methyl ketone, vinyl ethyl ketone, vinyl levulinate, acetoacetoxyethyl acrylate,

15

EP 0 516 074 B1

acetoacetoxyethyl methacrylate, carbon monoxide or diacetone-acrylamide are present as the ethylenically unsaturated comonomers containing carbonyl groups.

6. Process according to Claim 1, 2, 3 or 4, characterized in that diacetone-acrylamide, crotonaldehyde, methacrolein, acetoacetoxyethyl acrylate or acetoacetoxyethyl methacrylate are present as the ethylenically unsaturated comonomers containing carbonyl groups.

7. Process according to Claim 1, 2, 3, 4, 5 or 6, characterized in that the copolymers A used are copolymers based on ethylene/vinyl chloride copolymers having an ethylene content of preferably 10 to 50% by weight and a vinyl chloride content of 50 to 90% by weight, copolymers based on ethylene/vinyl ester copolymers, especially ethylene/vinyl acetate copolymers, having an ethylene content of preferably 10 to 50% by weight and a vinyl ester content of 50 to 90% by weight, copolymers based on ethylene/vinyl ester/(meth)acrylate copolymers having an ethylene content of 10 to 50% by weight, a vinyl ester content of 50 to 90% by weight and a (meth)acrylate content of 5 to 20% by weight, copolymers based on the said ethylene/vinyl chloride, ethylene/vinyl acetate and ethylene/vinyl acetate/(meth)acrylate polymers having a content of up to 10% by weight of N-methylolacrylamide, acrylic acid, vinylsulphonate and/or 2-hydroxypropyl acrylate, copolymers based on (meth)acrylates with methyl methacrylate, butyl acrylate and/or ethylhexyl acrylate, the % by weight data relating to the total weight of the copolymer A and always adding up to 100% by weight.

8. Process according to Claim 1, 2, 3, 4, 5, 6 or 7, characterized in that 0.3 to 4 mol, per mol of carbonyl groups in copolymer A, of the aminooxy crosslinking agent are used for the crosslinking.

9. Process according to Claim 1, 2, 3, 4, 5, 6, 7 or 8, characterized in that difunctional compounds of the formula $(H_2NO)_m R(CONHNH_2)_n$ with $m \geq 1$, $n = 0$ or 1, are used as crosslinking agents.

10. Process according to Claim 9, characterized in that compounds of the formula $(H_2NO)R(CONHNH_2)$ each substituted with one aminooxy group and one hydrazide group are used.

11. Process according to Claim 9, characterized in that crosslinking agents having two aminooxy groups of the formula $(H_2NO)_2 R$ are used.

12. Process according to Claim 9, characterized in that the crosslinking agents used are diaminooxyethane, 1,2-diaminooxy-propane, 1,3-diaminooxy-propane, 1,2-diaminooxy-butane, 1,3-diaminooxy-butane, 1,4-diaminooxy-butane, 2,3-diaminooxy-butane, 1,2-diaminooxy-isobutane, 1,3-diaminooxy-isobutane, disubstituted aminooxy-pentanes and aminooxy-isopentanes such as 1,5-diaminooxy-pentane, disubstituted aminooxy-hexanes and aminooxy-isohexanes such as 1,6-diaminooxy-hexane, 1,4-diaminooxy-butene, aminooxy-acetohydrazide, 2-aminooxy-propionohydrazide, 3-aminooxy-propionohydrazide, 2-methyl-2-aminooxy-propionohydrazide, 2-aminooxy-butyrohydrazide, 4-aminooxy-butyrohydrazide, 2-aminooxy-valerohydrazide, 5-aminooxy-valerohydrazide, 2-aminooxy-enanthohydrazide, 2-aminooxy-caprylohydrazide, 2-aminooxy-caprinohydrazide, 2-aminooxy-laurohydrazide, 2-aminooxy-myristohydrazide, 2-aminooxy-palmitohydrazide and 2-aminooxy-stearohydrazide or salts thereof.

13. Process according to Claim 9, characterized in that the crosslinking agents used are 1,3-diaminooxy-propane, 1,4-diaminooxy-butane, aminooxy-acetohydrazide, 2-aminooxy-propionohydrazide and 2-methyl-2-aminooxy-propionohydrazide or salts thereof.

14. Process according to Claim 9, characterized in that the crosslinking agents used are 1,3-diaminooxy-propane, 1,4-diaminooxy-butane or salts thereof.

15. Process according to any of Claims 1 to 14, characterized in that the aminooxy-functional crosslinking agents are first introduced in aqueous solution and the copolymer dispersion is added.

16. The use of aqueous dispersions prepared according to any of Claims 1 to 15 as binders for producing coverings, coatings and impregnations in the coatings field.

17. The use of aqueous dispersions prepared according to any of Claims 1 to 15 as binders in sealing compounds.

16

EP 0 516 074 B1

**18.** The use of aqueous dispersions prepared according to any of Claims 1 to 15 as adhesives.

**19.** The use of aqueous dispersions according to Claim 18, characterized in that these are used for producing non-woven materials.

**20.** The use of aqueous dispersions according to Claim 18, characterized in that these are used as adhesion promoters between the adhesive layer and the substrate in adhesive bonds.

**21.** The use of aqueous dispersions according to Claim 18, characterized in that these are used as adhesives for bonding to corona- and flame-pretreated polyolefin surfaces.

**Revendications**
**Revendications pour les Etats contractants suivants : DE, FR, GB, IT, NL, SE**

**1.** Dispersions aqueuses, contenant des agents de réticulation de type (amino-oxy), de copolymères contenant des groupes carbonyles, les dispersions contenant :
A) 30 à 70 % en poids, par rapport au poids total de la dispersion, d'un copolymère composé de 70 à 99,9 % en poids d'un ou plusieurs comonomères choisis dans l'ensemble formé par des esters de l'acide (meth)acrylique dérivant d'alcools comportant 1 à 10 atomes de carbone, des esters vinyliques carboxyliques aliphatiques saturés comportant 2 à 10 atomes de carbone, des oléfines, des composés vinyl aromatiques, des halogénures de vinyle et/ou des éthers vinyliques et 0,1 à 30 % en poids d'un ou plusieurs comonomères à insaturation éthylénique contenant des groupes carbonyles, comonomères choisis dans l'ensemble formé par des aldéhydes à insaturation éthyléni-que en $\alpha$-$\beta$, des alkylvinylcétones, des esters vinyliques d'acides cétocarboxyliques, des N-céto-acrylamides, le dicétène, le monoxyde de carbone et le (meth) acrylate d'acétoacétoxyéthyle, et
B) 0,1 à 10 moles, par mole de groupe(s) carbonyle(s) dans le copolymère A, d'un agent de réticulation de type (amino-oxy) répondant à la formule générale:

$(H_2NO)_mR(CONHNH_2)_n$

dans laquelle R représente un reste hydrocarboné aliphatique ou aromatique, substitué ou non substitué, ou un reste organosiloxane,
$m \geq$ à 1 et n valant 0 ou 1, et la somme ( m + n) étant $\leq$ à 3
ou leur sel avec un anion d'un acide organique ou minéral.

**2.** Dispersions aqueuses selon la revendication 1, caractérisées en ce que leur teneur en des comonomères à insaturation éthylénique, contenant des groupes carbonyles, est de 0,1 à 20 % en poids, par rapport au copolymère.

**3.** Dispersions aqueuses selon la revendication 1, caractérisées en ce que la teneur en des comonomères à insaturation éthylénique contenant des groupes carbonyles est de 0,5 à 5 %, par rapport au copolymère.

**4.** Dispersions aqueuses selon la revendication 1, 2 ou 3, caractérisées en ce qu'elles contiennent également jusqu'à 10 % en poids, par rapport au copolymère, de comonomères fonctionnels à insaturation éthylénique.

**5.** Dispersions aqueuses selon la revendication 1, 2, 3 ou 4, caractérisées en ce qu'elles contiennent, comme comonomères à insaturation éthylénique contenant des groupes carbonyles, de l'acroléine, de la méthacroléine, du crotonaldéhyde, du formylstyrène, de la vinylméthylcétone, de la vinyléthylcétone, du lévulinate de vinyle, de l'acrylate d'acéto-acétoxy éthyle, du méthacrylate d'acéto-acétoxyéthyle, du monoxyde de carbone ou du diacétone-acrylamide.

**6.** Dispersions aqueuses selon la revendication 1,2,3 ou 4, caractérisées en ce qu'elles contiennent, comme comonomères à insaturation éthylénique contenant des groupes carbonyles, du diacétone-acrylamide, du crotonaldéhyde, de la méthacroléine, de l'acrylate d'acéto-acétoxy éthyle ou du méthacrylate d'acéto-acétoxy éthyle.

17

7.  Dispersions aqueuses selon la revendication 1, 2, 3, 4, 5 ou 6, caractérisées en ce qu'on utilise comme copolymères A des copolymères à base de copolymères d'éthylène/chlorure de vinyle ayant une teneur en éthylène qui est avantageusement de 10 à 50 % en poids et une teneur en du chlorure de vinyle qui est de 50 à 90 % en poids, des copolymères à base de copolymères de l'éthylène et d'un ester vinylique, notamment des copolymères de l'éthylène et de l'acétate de vinyle, ayant une teneur en éthylène qui est avantageusement de 10 à 50 % en poids et une teneur en ester vinylique de 50 à 90 % en poids, des copolymères à base de copolymères de l'éthylène, d'un ester vinylique et d'un ester d'acide (meth)acrylique ayant une teneur en éthylène de 10 à 50 % en poids, une teneur en ester vinylique de 50 à 90 % en poids et une teneur en ester d'acide (meth)acrylique de 5 à 20 % en poids, des copolymères à base des polymères cités d'éthylène/chlorure de vinyle, d'éthylène/acétate de vinyle et d'éthylène/acétate de vinyle/(meth)acrylate contenant jusqu'à 10 % en poids N-méthylolacrylamide, d'acide acrylique, de vinylsulfonate et/ou d'acrylate de 2-hydroxy-propyle, des copolymères à base d'un ester d'acide (meth)acrylique avec du méthacrylate de méthyle, de l'acrylate de butyle et/ou de l'acrylate d'éthylhexyle, les indications de pourcentage en poids se rapportant au poids total du copolymère A et formant toujours par addition 100 % en poids.

8.  Dispersions aqueuses selon la revendication 1, 2, 3, 4, 5, 6 ou 7, caractérisées en ce qu'on utilise, pour la réticulation, 0,3 à 4 moles, par mole de groupes carbonyles présents dans le copolymère A , de l'agent de réticulation de type (amino-oxy).

9.  Dispersions aqueuses selon la revendication 1, 2, 3, 4,5,6 ,7 ou 8, caractérisées en ce qu'on utilise comme agent de réticulation des composés difonctionnels de formule$(H_2NO)_mR(CONHNH_2)_n$, dans laquelle $m \geq 1$, n valant 0 ou 1.

10. Dispersions aqueuses selon la revendication 9, caractérisées en ce qu'on utilise des composés de formule $(H_2NO)R(CONHNH2)$ comportant chaque fois comme substituant un groupe (amino-oxy) et un groupe hydrazide.

11. Dispersions aqueuses selon la revendication 9, caractérisées en ce qu'on utilise l'agent de réticulation comportant deux groupes (amino-oxy) et répondant à la formule $(H_2NO)_2R$.

12. Dispersions aqueuses selon la revendication 9, caractérisées en ce qu'on utilise comme agent de réticulation de l'(amino-oxy) éthane, du 1,2-di(amino-oxy)propane, du 1,3-di(amino-oxy)-propane, du 1,2-di-(amino-oxy) butane, du 1,3-di-(amino-oxy)-butane, du 1,4-di-(amino-oxy)-butane, du 2,3-di-(amino-oxy)-butane, du 1,2-di-(amino-oxy)-isobutane, du 1,3-di-(amino-oxy)-isobutane, des (amino-oxy)-pentanes et des (amino-oxy)-isopentanes disubstitués comme le 1,5-di-(amino-oxy)-pentane, des (amino-oxy)-hexane et des (amino-oxy)-isohexanes disubstitués comme le 1,6-di-(amino-oxy)-hexane, le 2,4-di-(amino-oxy)-butène, l'hydrazide de l'acide (amino-oxy)-acétique, l'hydrazide de l'acide 2-(amino-oxy)-propionique, l'hydrazide de l'acide 3-(amino-oxy)-propionique, l'hydrazide de l'acide 2-méthyl-2-(amino-oxy)-propionique, l'hydrazide de l'acide 2-(amino-oxy)-butyrique, l'hydrazide de l'acide 4-(amino-oxy)-butyrique, l'hydrazide de l'acide 2-(amino-oxy)-valérianique, l'hydrazide de l'acide 5-(amino-oxy)-valérianique, l'hydrazide de l'acide 2-(amino-oxy)-oenanthique, l'hydrazide de l'acide 2-(amino-oxy)-caprylique, l'hydrazide de l'acide 2-(amino-oxy) caprique, l'hydrazide de l'acide 2-(amino-oxy) laurique, l'hydrazide de l'acide 2-(amino-oxy)-myristique, l'hydrazide de l'acide 2-(amino-oxy) palmitique, l'hydrazide de l'acide 2-(amino-oxy)-stéarique ou leurs sels.

13. Dispersions aqueuses selon la revendication 9, caractérisées en ce qu'on utilise comme agent de réticulation, 1,3-di-(amino-oxy)-propane, du 1,4-di-(amino-oxy)-butane, de l'hydrazide d'acide (amino-oxy)-acétique, de l'hydrazide d'acide 2-(amino-oxy) proprionique et de l'hydrazide d'acide 2-méthyl-2-(amino-oxy)-propionique ou leurs sels.

14. Dispersions aqueuses selon la revendication 9, caractérisées en ce qu'on utilise comme agent de réticulation le 1,3-di-(amino-oxy)-propane, le 1,4-di-(amino-oxy)-butane ou leurs sels.

15. Procédé de préparation de dispersions aqueuses selon la revendicaiton 1 à 14, procédé caractérisé en ce qu'on place tout d'abord l'agent de réticulation comportant un ou des groupes (amino-oxy) fonctionnels en solution aqueuse, ou bien en ce qu'on ajoute l'agent à la dispersion de copolymère.

**16.** Procédé selon la revendication 15, caractérisé en ce qu'on place tout d'abord l'agent de réticulation comportant un ou des groupes (amino-oxy) fonctionnels en solution aqueuse et l'on ajoute la dispersion de copolymère.

**17.** Utilisation de dispersiosn aqueuses selon la revendication 1 à 16 comme liant pour la préparation de revêtements, d'enduits et d'imprégnations dans le domaine du revêtement ("Coating") ou du couchage.

**18.** Utilisation de dispersions aqueuses selon la revendication 1 à 16, comme liant dans des compositions d'étanchement.

**19.** Utilisation de dispersions aqueuses selon la revendication 1 à 16 comme colles ou adhésifs.

**20.** Utilisation de dispersions aqueuses selon la revendication 19, caractérisée en ce qu'on les utilise pour la préparation d'étoffes en nappe de fibres ou étoffes nappées.

**21.** Utilisation de dispersions aqueuses selon la revendication 19, caractérisée en ce qu'on les utilise comme adjuvant d'adhérence, entre une couche de colle et un substrat, dans des joints collés.

**22.** Utilisation de dispersions aqueuses selon la revendication 19, caractérisée en ce qu'on les utilise comme colles et adhésifs pour le collage de surfaces de polyoléfine(s) pré-traitées par effet Corona ou par passage à la flamme.

**Revendications pour l'Etat contractant suivant : ES**

**1.** Procédé de préparation de dispersions aqueuses, contenant de l'agent de réticulation de type (amino-oxy), ces dispersions contenant :

A) 30 à 70 % en poids, par rapport au poids total de la dispersion, d'un copolymère formé de 70 à 99,9 % en poids d'un ou plusieurs comonomères choisis dans l'ensemble formé par des esters de l'acide (meth)acrylique dérivant d'alcools comportant 1 à 10 atomes de carbone, des esters vinyliques d'acides carboxyliques aliphatiques saturés comportant 2 à 10 atomes de carbone, des oléfines, des composés vinyl aromatiques, des halogénures de vinyle et/ou des éthers oxydes de vinyle et 0,1 à 30 % en poids d'un ou plusieurs comonomères à insaturation éthylénique, contenant des groupes carbonyles, comonomères choisis dans l'ensemble formé par des aldéhydes à insaturation éthylénique en $\alpha$-$\beta$, des alkylvinylcétones, des esters vinyliques d'acides cétocarboxyliques, des N-cétoacrylamides, le dicétène, le monoxyde de carbone et le (meth) acrylate d'acétoacétoxyéthyle, et

B) 0,1 à 10 moles, par mole des groupes carbonyles présents dans le copolymère A, d'un agent de réticulation de type (amino-oxy), de formule générale $(H_2NO)_mR\ (CONHNH_2)_n$, dans laquelle R représente un reste hydrocarboné aliphatique ou aromatique, substitué ou non substitué, ou un reste organosiloxane; $m \geq 1$ et n valant 0 ou 1, et la somme $(m+n)$ étant $\leq 3$, ou leurs sels avec un anion d'un acide organique ou minéral,

les agents de réticulation contenant un ou des groupes (amino-oxy) fonctionnels étant placés tout d'abord, de façon préliminaire, en solution aqueuse, ou bien ces agents étant ajoutés à la dispersion de copolymère.

**2.** Procédé selon la revendication 1, caractérisé en ce que la teneur en des comonomères à insaturation éthylénique, contenant des groupes carbonyles, est de 0,1 à 20 % en poids, par rapport au copolymère.

**3.** Procédé selon la revendication 1, caractérisé en ce que la teneur en des comonomères à insaturation éthylénique, contenant des groupes carbonyles, est de 0,5 à 5% en poids, par rapport au copolymère.

**4.** Procédé selon la revendication 1, 2, ou 3, caractérisé en ce que des comonomères fonctionnels à insaturation éthylénique sont encore contenus dans une proportion pouvant aller jusqu'à 10 % en poids, par rapport au copolymère.

**5.** Procédé selon la revendication 1,2,3, ou 4, caractérisé en ce que sont contenus comme comonomères à insaturation éthylénique contenant des groupes carbonyles l'acroléine, la méthacroléine, le crotonaldéhyde, le formylstyrène, la vinylméthylcétone, la vinyléthylcétone, le lévulinate de vinyle, l'acrylate d'acéto-acétoxyéthyle, le methacrylate d'acéto-acétoxy éthyle, le monoxyde de carbone ou le diacétone-acrylamide.

6. Procédé selon la revendication 1,2,3, ou 4, caractérisé en ce que sont contenus comme comonomères à insaturation éthylénique contenant des groupes carbonyles, le diacétone-acrylamide, le crotonaldéhyde, la methacroléine, l'acrylate d'acétoxy éthyle ou le methacrylate d'acétoacétoxy éthyle.

7. Procédé selon la revendication 1, 2,3,4,5 ou 6, caractérisé en ce qu'on utilise comme copolymères A des copolymères à base de copolymères d'éthylène/chlorure de vinyle ayant une teneur en éthylène qui est avantageusement de 10 à 50 % en poids et une teneur en chlorure de vinyle de 50 à 90 % en poids, des copolymères à base de copolymères de l'éthylène/ester vinylique notamment de l'éthylène/acétate de vinyle, ayant une teneur en éthylène qui est avantageusement de 10 à 50 % en poids et une teneur en ester vinylique de 50 à 90 % en poids, des copolymères à base de copolymères de l'éthylène/ester vinylique/ester d'acide (meth)acrylique ayant une teneur en éthylène de 10 à 50 % en poids, une teneur en ester vinylique de 50 à 90 % en poids et une teneur en ester d'acide (meth)-acrylique de 5 à 20 % en poids, des copolymères à base des polymères précités d'éthylène/chlorure de vinyle, d'éthylène/acétate de vinyle et d'éthylène/acétate de vinyle/(meth) acrylate ayant une teneur allant jusqu'à 10 % en poids en N-méthylol acrylamine, en acide acrylique, en vinylsulfonate et/ou en acrylate de 2-hydroxypropyle, des copolymères à base d'un ester d'acide(meth) acrylique avec du méthacrylate de méthyle, de l'acrylate de butyle et/ou de l'acrylate d'éthyl-hexyle, les données étant en pourcentage en poids par rapport au poids total du copolymère A et ces données donnant toujours 100 % en poids par addition.

8. Procédé selon la revendication 1,2,3,4,5,6 ou 7, caractérisé en ce qu'on utilise pour la réticulation 0,3 à 4 moles, par mole de groupes carbonyles présents dans le copolymère A, de l'agent de réticulation de type (amino-oxy).

9. Procédé selon la revendication 1, 2, 3,4,5,6,7 ou 8, caractérisé en ce qu'on utilise comme agent de réticulation des composés difonctionnels de formule $(H_2NO)_mR(CONHNH_2)_n$ dans laquelle $m \geq 1$, et n vaut 0 ou 1.

10. Procédé selon la revendication 9, caractérisé en ce qu'on utilise des composés de formule $(H_2NO)R$-$(CONHNH_2)$ comportant toujours comme substituants un groupe (amino-oxy) et un groupe hydrazide.

11. Procédé selon la revendication 9, caractérisé en ce qu'on utilise des agents de réticulation de formule $(H_2NO)_2R$, comportant deux groupes (amino-oxy).

12. Procédé selon la revendication 9, caractérisé en ce qu'on utilise comme agent de réticulation du di-(amino-oxy) éthane, du 1,2-di-(amino-oxy)-propane, du 1,3-di-(amino-oxy)-propane, du 1,2-di-(amino-oxy)-butane, du 1,3-di-(amino-oxy)-butane, du 1,4-di(amino-oxy)-butane, du 2,3-di-(amino-oxy)-butane, du 1,2-di-(amino-oxy)-isobutane, du 1,3-di-(amino-oxy)-isobutane, des (amino-oxy)-pentanes et (amino-oxy)-isopentanes disubstitués comme du 1,5-di-(amino-oxy)-pentane, des (amino-oxy)-hexanes et (amino-oxy)-isohexanes disubstitués comme le 1,6-di-(amino-oxy)-hexane, le 1,4-di-(amino-oxy)-butène, de l'hydrazide d'acide (amino-oxy) acétique, de l'hydrazide d'acide 2-(amino-oxy)-propionique, de l'hydrazide d'acide 3-(amino-oxy)propionique, de l'hydrazide d'acide 2-méthyl-2-(amino-oxy)-propionique, de l'hydrazide d'acide 2-(amino-oxy)-butyrique, de l'hydrazide d'acide 4-(amino-oxy)-butyrique, de l'hydrazide d'acide 2-(amino-oxy)-valérianique, de l'hydrazide d'acide 5-(amino-oxy)-valérianique, de l'hydrazide d'acide 2-(amino-oxy)-oenanthique, de l'hydrazide d'acide 2-(amino-oxy) caprylique, de l'hydrazide d'acide 2-(amino-oxy)-caprique, de l'hydrazide d'acide 2-(amino-oxy)-laurique, de l'hydrazide d'acide 2-(amino-oxy)-myristique, de l'hydrazide d'acide 2-(amino-oxy) palmitique, de l'hydrazide d'acide 2-(amino-oxy)-stéarique ou leurs sels.

13. Procédé selon la revendication 9, caractérisé en ce qu'on utilise comme agent de réticulation du 1,3-di-(amino-oxy)-propane, du 1,4-di-(amino-oxy)-butane, de l'hydrazide d'acide (amino-oxy)-acétique, de l'hydrazide d'acide 2-(amino-oxy) propionique et de l'hydrazide d'acide 2-méthyl-2-(amino-oxy)-propionique ou leurs sels.

**14.** Procédé selon la revendication 9, caractérisé en ce qu'on utilise comme agent de réticulation du 1,3-di-(amino-oxy)-propane, du 1,4-di-(amino-oxy)-butane ou leurs sels.

**15.** Procédé selon la revendication 1 à 14, caractérisé en ce qu'on place tout d'abord l'agent de réticulation à groupe(s) (amino-oxy) fonctionnel(s) en solution aqueuse et l'on y ajoute la dispersion de copolymère.

**16.** Utilisation de dispersions aqueuses préparées selon la revendication 1 à 15, comme liant pour la préparation de revêtements, d'enduits et d'imprégnations dans le domaine du "Coating" (revêtement ou couchage).

**17.** Utilisation de dispersions aqueuses préparées selon la revendication 1 à 15 comme liant dans des compositions d'étanchement.

**18.** Utilisation de dispersions aqueuses préparées selon la revendicaiton 1 à 15 comme adhésifs ou colles.

**19.** Utilisation de dispersions aqueuses selon la revendication 18, caractérisée en ce qu'on les utilise pour préparer des étoffes nappées (étoffes de nappes de fibres).

**20.** Utilisation de dispersions aqueuses selon la revendication 18, caractérisée en ce qu'on les utilise comme adjuvants d'adhérence entre une couche de colle et un substrat dans des joints collés.

**21.** Utilisation de dispersions aqueuses selon la revendication 18, caractérisée en ce qu'on les utilise comme adhésifs ou colles pour coller des surfaces de polyoléfines pré-traitées par effet Corona et par traitement à la flamme.